# EUROPEAN PATENT SPECIFICATION

(11) **EP 3 285 049 B1**
(45) Date of publication and mention of the grant of the patent: **29.01.2020**
(21) Application number: 17159648.9
(22) Date of filing: 07.03.2017
(51) Int. Cl.: G01H 3/00, H04R 3/00, H04R 29/00, H04M 3/22, G01S 7/52

(54) **METHOD AND DEVICE FOR MICROPHONE SELECTION**
VERFAHREN UND VORRICHTUNG ZUR MIKROFONAUSWAHL
PROCÉDÉ ET DISPOSITIF DE SÉLECTION DE MICROPHONE

(30) Priority: 16.08.2016 CN 201610680489
(43) Date of publication of application: 21.02.2018
(73) Proprietor: Beijing Xiaomi Mobile Software Co., Ltd., Beijing 100085 (CN)
(72) Inventor: WANG, Nannan, Beijing 100085 (CN); YEN, Chiafu, Beijing 100085 (CN); XIONG, Dawei, Beijing 100085 (CN)
(74) Representative: Steinbauer, Florian

(56) References cited:
- WO-A1-2014/092472
- WO-A1-2015/131706
- WO-A1-2015/154424
- US-A1- 2010 150 360

## Description

### FIELD

The present invention generally relates to ultrasound application technologies, and more particularly, to methods and devices for microphone selection.

### BACKGROUND

Generally, a smart device having an ultrasonic function may use an ultrasonic transmitter within the smart device to transmit an ultrasonic wave and use a microphone on the smart device to receive the reflected ultrasound, when performing the ultrasonic function.

Currently the smart device may be configured with two or more microphones. At a stage of factory setting, a microphone on the smart device would be fixedly selected as a receiver for receiving ultrasound. For example, if the smart device is configured with three microphones on its back body, then the one in the middle of the three microphones may be selected as the receiver for receiving ultrasound.

However, in practical applications, due to limitations of hardware conditions, the microphone selected for receiving ultrasonic signals is not always the best receiver for receiving ultrasound, compared with other microphones.

D1 (WO 2015/131706 A1) discloses a microphone selection method comprising using ultrasonic to measure a microphone which is nearest to a primary sound source in a microphone matrix of a sound-recording device; and taking the microphone which is nearest to the primary sound source as a current primary microphone, and taking other microphones in the microphone matrix as secondary microphones, wherein the primary microphone is used for collecting the primary sound source, and the secondary microphones are used for collecting ambient noise.

D2 (WO 2015/154424 A1) discloses a method and system for determining a main microphone and an auxiliary microphone among multiple microphones. The method comprises determining a microphone closest to a sound source among multiple microphones as a main microphone; and selecting a microphone except the main microphone among the multiple microphones as an auxiliary microphone.

D3 (US 2010/150360 A1) discloses systems and methods that perform audio source localization in a manner that provides increased robustness and responsiveness in the presence of acoustic echo. The systems and methods calculate a difference between a signal level associated with one or more of the audio signals generated by a microphone array and an estimated level of acoustic echo associated with one or more of the audio signals. This information is then used to determine whether and/or how to perform audio source localization.

D4 (WO 2014/092472 A1) discloses an ultrasound diagnosis system including an ultrasound probe apparatus transmitting an ultrasound signal to obtain an ultrasound image of a subject, receiving the ultrasound signal reflected from the subject, emitting ultrasound to a probe cap to test a provided piezoelectric device module, and receiving an ultrasound echo obtained from the probe cap and an ultrasound diagnosis apparatus constructing a database for ultrasound echo data of a normal operation of the piezoelectric device module provided in the ultrasound probe apparatus, executing a probe test mode for testing an operation of the piezoelectric device module, receiving data of the ultrasound echo obtained from the probe cap from the ultrasound probe apparatus, comparing with the ultrasound echo data of the normal operation of the piezoelectric device module in the database, and displaying whether the piezoelectric device module is normal or defective as a test result.

### SUMMARY

In view of the fact in related art, methods and devices for microphone selection are provided in the invention.

According to a first aspect of the present invention, there is provided a method for microphone selection according to claim 1.

Frequency response values of the second ultrasonic waves received by each of the at least two microphones may be acquired by using each of the at least two microphones to receive second ultrasonic waves reflected from the first ultrasonic waves within the test box. Since the first ultrasonic waves are transmitted within the audio-enclosed test box and each microphone corresponds to the same first ultrasonic waves, the differences between the frequency response values of the second ultrasonic waves are mainly caused by hardware conditions of the microphones. Accordingly, by acquiring frequency response values of the second ultrasonic waves received by each of the at least two microphones, one of the at least two microphones which has a highest frequency response value may be determined as a preferred microphone, such that the preferred microphone is a microphone that has a minimum influence on the frequency response values of the received ultrasonic waves among the microphones.

By determining the highest frequency response value for each of the at least two microphones as a standard frequency response value of the microphone, each microphone's standard frequency response value may be obtained, for use in the determination of the preferred microphone in the subsequent processes. By selecting the microphone between the at least two microphones which has the highest standard frequency response value as the microphone configured for receiving ultrasonic waves during subsequent operations of the mobile device, it is ensured that the microphone having a minimum influence on ultrasonic waves can be determined as the preferred microphone.

Optionally, the method may also include: determining the frequency corresponding to the highest standard frequency response value as a predefined frequency of the mobile device, and determining the highest standard frequency response value as a standard frequency response value of the mobile device.

According to a second aspect of the present invention, there is provided a method for microphone selection, wherein the method is applied in a mobile device having at least two microphones, the method including: transmitting, by using an ultrasonic transmitter, a first ultrasonic wave with a predefined transmission strength and a predefined frequency; acquiring, by using each of the at least two microphones to receive a second ultrasonic wave reflected from the first ultrasonic wave, a frequency response value of the second ultrasonic wave received by each of the at least two microphones, wherein the frequency response value of the second ultrasonic wave received by each of the at least two microphones is the highest amplitude received by the microphone within periods of the second ultrasonic wave of the predefined frequency; comparing, for each of the at least two microphones, the frequency response value of the microphone with a standard frequency response value of the microphone; and selecting the microphone between the at least two microphones which has a smallest difference value between the frequency response value and the standard frequency response value, as the microphone configured for receiving ultrasonic waves during subsequent operations of the mobile device.

Frequency response values of the second ultrasonic waves received by each of the at least two microphones may be acquired by using each of the at least two microphones to receive second ultrasonic waves reflected from the first ultrasonic waves within the test box, and then one of the at least two microphones which has a smallest difference value between the frequency response value and the standard frequency response value is selected as the microphone configured for receiving ultrasonic waves during subsequent operations of the mobile device. If the frequency response value of a microphone is more close to the standard frequency response value, it indicates that this microphone is more close to the effects of the standard measurement in the current environment. Therefore, by determining one of the at least two microphones which has a smallest difference value between the frequency response value and the standard frequency response value, as a preferred microphone, it is ensured that the preferred microphone is a microphone that has a minimum influence on the frequency response values of the received ultrasonic waves among the microphones.

Optionally, the method may also include: transmitting, by an ultrasonic transmitter of the mobile device, third ultrasonic waves within an audio-enclosed test box, wherein the third ultrasonic waves are transmitted with a predefined transmission strength and in different frequencies selected from a predefined frequency range; acquiring, by using each of the at least two microphones to receive fourth ultrasonic waves reflected from the third ultrasonic waves within the test box, frequency response values of the fourth ultrasonic waves received by each of the at least two microphones; and acquiring a highest frequency response value for each of the at least two microphones, and determining the highest frequency response value for each of the at least two microphones as the standard frequency response value of the microphone, wherein for each fourth ultrasonic wave reflected from a respective third ultrasonic wave of a respective frequency selected from the predefined frequency range, a frequency response value of the fourth ultrasonic wave received by each of the at least two microphones is the highest amplitude received by the microphone within periods of the fourth ultrasonic wave of the respective frequency.

According to a third aspect of the present invention, there is provided a device for microphone selection according to claim 5.

Optionally, the device may also include: a second determination module configured to determine the frequency corresponding to the highest standard frequency response value as a predefined frequency of the mobile device and determine the highest standard frequency response value as a standard frequency response value of the mobile device.

According to a fourth aspect of the present invention, there is provided a device for microphone selection, wherein the device is used in a mobile device having at least two microphones, the device including: a first transmission module configured to transmit, by using an ultrasonic transmitter, a first ultrasonic wave with a predefined transmission strength and in different frequencies selected from a predefined frequency range; an acquisition module configured to acquire, by using each of the at least two microphones to receive second ultrasonic waves reflected from the first ultrasonic waves within the test box, frequency response values of the second ultrasonic waves received by the at least two microphones; and a first determination module configured to select of the microphone between the at least two microphones which has a highest frequency response value, as the microphone configured for receiving ultrasonic waves during subsequent operations of the mobile device, wherein for each second ultrasonic wave reflected from a respective first ultrasonic wave of a respective frequency selected from the predefined frequency range, a frequency response value of the second ultrasonic wave received by each of the at least two microphones is the highest amplitude received by the microphone within periods of the second ultrasonic wave of the respective frequency.

Optionally, the first determination module may further include: an acquisition sub-module configured to acquire a highest frequency response value for each of the at least two microphones by comparing the frequency response values of the second ultrasonic waves of the different frequencies received by the microphone and determining a highest frequency response value as the highest frequency response value of the microphone, and determine the highest frequency response value for each of the at least two microphones as a standard frequency response value of the microphone; and a determination sub-module configured to select the microphone between the at least two microphones which has the highest standard frequency response value as the microphone configured for receiving ultrasonic waves during subsequent operations of the mobile device.

Optionally, the device may also include: a second determination module configured to determine the frequency corresponding to the highest standard frequency response value as a predefined frequency of the mobile device and determine the highest standard frequency response value as a standard frequency response value of the mobile device.

According to a fourth aspect of the present invention, there is provided a device for microphone selection, wherein the device is used in a mobile device having at least two microphones, the device including: a first transmission module configured to transmit, by using an ultrasonic transmitter, a first ultrasonic wave with a predefined transmission strength and a predefined frequency; a first acquisition module configured to acquire, by using each of the at least two microphones to receive a second ultrasonic wave reflected from the first ultrasonic wave that is transmitted by the first transmission module, a frequency response value of the second ultrasonic wave received by each of the at least two microphones, wherein the frequency response value of the second ultrasonic wave received by each of the at least two microphones is the highest amplitude received by the microphone within periods of the second ultrasonic wave of the predefined frequency; a comparison module configured to compare, for each of the at least two microphones, the frequency response value of the microphone acquired by the first acquisition module with a standard frequency response value of the microphone; and a first determination module configured to select the microphone between the at least two microphones which has a smallest difference value between the frequency response value and the standard frequency response value, as the microphone configured for receiving ultrasonic waves during subsequent operations of the mobile device.

Optionally, the device may also include: a second transmission module configured to transmit, by using an ultrasonic transmitter of the mobile device, third ultrasonic waves within an audio-enclosed test box, wherein the third ultrasonic waves are transmitted with a predefined transmission strength and in different frequencies selected from a predefined frequency range; a second acquisition module configured to acquire, by using each of the at least two microphones to receive fourth ultrasonic waves reflected from the third ultrasonic waves within the test box, frequency response values of the fourth ultrasonic waves received by each of the at least two microphones; and a second determination module configured to acquire a highest frequency response value for each of the at least two microphones based on the frequency response values acquired by the second acquisition module and determine the highest frequency response value for each of the at least two microphones as the standard frequency response value of the microphone, wherein for each fourth ultrasonic wave reflected from a respective third ultrasonic wave of a respective frequency selected from the predefined frequency range, a frequency response value of the fourth ultrasonic wave received by each of the at least two microphones is the highest amplitude received by the microphone within periods of the fourth ultrasonic wave of the respective frequency.

According to a fifth aspect of the present invention, there is provided a device for microphone selection, wherein the device is used in a mobile device having at least two microphones, the device including: a processor; and a memory for storing instructions executable by the processor. The processor may be configured to perform a method according to the invention.

The present invention also provides a computer program, which when executed on a processor of a device, performs a method according to the invention, and a computer readable storage device having stored thereon such a computer program.

It is to be understood that both the forgoing general description and the following detailed description are exemplary only, and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart of a method for microphone selection according to an exemplary embodiment;
Fig. 1B is a schematic diagram of waveforms of a 40 kHz ultrasonic signal when broadcasting in a space according to an exemplary embodiment;
Fig. 2 is a flow chart of another method for microphone selection according to an exemplary embodiment;
Fig. 3A is a block diagram of a device for microphone selection according to an exemplary embodiment;
Fig. 3B is a block diagram of another device for microphone selection according to an exemplary embodiment;
Fig. 4A is a block diagram of yet another device for microphone selection according to an exemplary embodiment;
Fig. 4B is a block diagram of yet another device for microphone selection according to an exemplary embodiment; and
Fig. 5 is a block diagram of another device for microphone selection according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of devices and methods consistent with aspects related to the invention as recited in the appended claims.

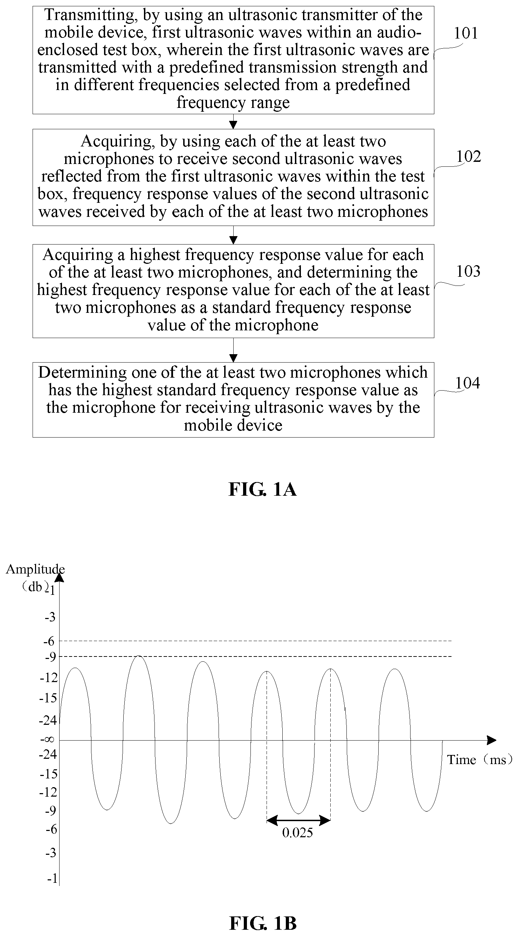

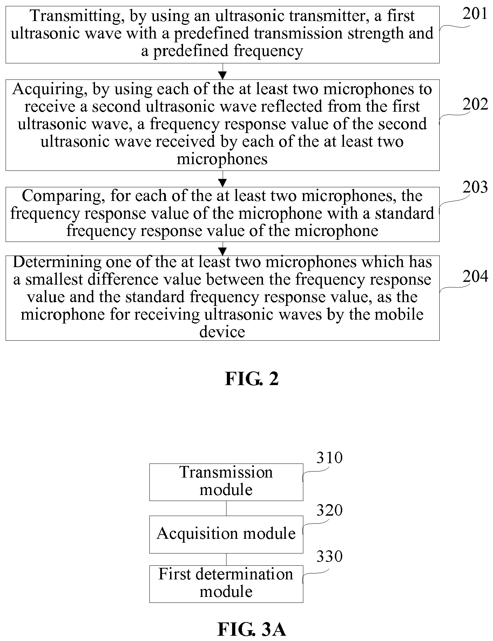

In practical application, a smart device may be configured with two or more microphones. Due to limitations of hardware conditions, the microphone selected for receiving ultrasonic signals, compared with other microphones, may not always be the best receiver for receiving ultrasound. In order to find a microphone optimal for receiving ultrasonic signals, two exemplary approaches are provided in the present invention, one approach is to perform a measurement before the smart device leaving the factory so as to find the optimal microphone, and another approach is to determine the optimal microphone when actually operating the smart device. These two approaches may be exemplary illustrated in Figs. 1A and 2 respectively.

Fig. 1A is a flow chart of a method for microphone selection according to an exemplary embodiment. As shown in Fig. 1A, the microphone selection method is applied in a smart device having at least two microphones, and include the following steps.

Step 101, first ultrasonic waves is transmitted within an audio-enclosed test box, by using an ultrasonic transmitter of the mobile device. The first ultrasonic waves are transmitted with a predefined transmission strength and in different frequencies selected from a predefined frequency range.

The ultrasonic transmitter as described herein may be an element in the mobile device which is dedicated for transmitting ultrasonic waves, and may also be a speaker located on the smart device.

For mobile devices to be on-sale, each mobile device has an ultrasound transmission frequency which is best suitable for itself. These transmission frequencies generally fall within a predefined frequency range, for example a range from 20 kHz to 50 kHz.

In order to make the mobile device transmit ultrasound in its best suitable transmission frequency, during a measurement stage before leaving the factory, the mobile device may be controlled to transmit frequency sweep signal within the predefined frequency range, i.e., transmitting ultrasonic waves with their frequencies orderly varying within the predefined frequency range.

In an embodiment, one or more frequencies would be selected from the predefined frequency range in sequence, for example, the selected frequencies will be started from 20 kHz. For a selected frequency, the ultrasonic transmitter of the mobile device may be used to transmit, with a predefined transmission strength, a first ultrasonic wave having the selected frequency within the audio-enclosed test box.

The predefined transmission strength as described herein may be a particular transmission strength configured for the mobile device. In general, the transmission strength is directly proportional to an initial amplitude of the transmitted ultrasonic wave, i.e., the stronger the transmission strength, the higher the initial amplitude of the transmitted ultrasonic wave. The transmission frequency usually would not be influenced by the transmission strength.

The audio-enclosed test box as described herein is capable of blocking audio from transmitting outside, which is targeted to provide a proper environment for the mobile device. In the text box, the ultrasonic waves may be less influenced by other factors.

Due to influences caused by factors such as transmission medium, transmission medium temperature, transmission medium density, etc., the received ultrasonic wave which is reflected back may be attenuated by a certain degree. Since the measurement is performed within the audio-enclosed test box, the attenuation in this embodiment would be lower.

Step 102, the at least two microphones are used to receive second ultrasonic waves reflected from the first ultrasonic waves within the test box, so as to acquire frequency response values of the second ultrasonic waves received by each of the at least two microphones.

Each of the at least two microphones may be controlled to receive second ultrasonic waves reflected from the first ultrasonic waves within the test box.

For each of the second ultrasonic waves received by a microphone, the frequency response value may be the highest amplitude within periods of the second ultrasonic wave received by the microphone. As shown in Fig. 1B, after the transmission of a first ultrasonic wave, a microphone would receive a reflected second ultrasonic wave. Due to influences of environment factors and the microphone, amplitudes of the periods within the received second ultrasonic wave may be different. In the embodiment, the highest amplitude within the periods of the second ultrasonic wave received by the microphone is determined as the frequency response value of the second ultrasonic wave received by the microphone. In Fig. 1B, a second ultrasonic wave of 40 kHz is shown for exemplary. If the transmitted first ultrasonic wave has a highest amplitude of -6 dB, then influenced by the environment, the received second ultrasonic wave may have a highest amplitude of -9 dB, i.e., the frequency response value of this second ultrasonic wave is -9 dB.

Because of the influences of environmental factors within the text box, after transmitted with the selected frequency, the first ultrasonic wave may have different attenuation degrees for each period's amplitude. Accordingly, the second ultrasonic wave reflected back may have different amplitudes within its periods.

Since each microphone receives a second ultrasonic wave reflected back from a same first ultrasonic wave and different microphones may be constructed with different hardware elements, the frequency response value of the second ultrasonic wave received by each microphone would be influenced by the hardware structure of the microphones. That is to say, even the first ultrasonic wave is the same and the first ultrasonic wave is transmitted in a same environment, the frequency response values of the second ultrasonic wave received by different microphones are different.

In order to determine one of the microphones which has minimum influence on the frequency response value, it is required to acquire frequency response values of the second ultrasonic wave received by each microphone.

Step 103, a highest frequency response value for each of the at least two microphones is acquired and the highest frequency response value for each of the at least two microphones is determined as a standard frequency response value of the microphone.

In actual implementations, when acquiring the highest frequency response value for each of the at least two microphones, for each microphone, the mobile device may compare the frequency response values of the second ultrasonic waves received by the microphone and determine a highest frequency response value as the highest frequency response value of the microphone. In an example, different second ultrasonic waves may correspond to different frequencies.

Each time a frequency is selected from the predefined frequency range, each microphone may have its own frequency response value. Thus, for different frequencies selected within the predefined frequency range, each microphone may obtain its own highest frequency response value. In an embodiment, the highest frequency response value of a microphone may be stored as the highest frequency response value of the microphone.

Each microphone's highest frequency response value may be stored in the mobile device. During an operation process after leaving the factory, the mobile device may also determine a preferred microphone based on the highest frequency response values of the microphones. The detailed process may refer to the steps in Fig. 2.

Step 104, the microphone between the at least two microphones which has a highest frequency response value may be selected as the microphone configured for receiving ultrasonic waves during subsequent operations of the mobile device.

The higher standard frequency response value indicates that its corresponding microphone has a smaller influence on the processing of the reflected ultrasonic wave. Thus, such microphone may be determined as a preferred microphone.

Before leaving the factory, if it is desired to determine a preferred microphone, one microphone having a highest frequency response value may be selected as the microphone configured for receiving ultrasonic waves during subsequent operations of the mobile device. Accordingly, during the initialization process before leaving the factory, the microphone for receiving ultrasonic waves may be configured in the mobile device in this embodiment. Then the microphone configured for receiving ultrasonic waves may be used to receive ultrasonic waves during subsequent operations of the mobile device.

Optionally, other microphone may be configured to not receive ultrasonic waves.

In order to make the mobile device operate in a more suitable frequency, in this embodiment, the frequency corresponding to the highest standard frequency response value may be determined as a predefined frequency of the mobile device, and the highest standard frequency response value may be determined as a standard frequency response value of the mobile device.

In actual implementations, the standard frequency response value of the mobile device may be referred when the mobile device is normally using ultrasonic waves. For example, when the actual frequency response value is too low, the transmission strength may be appropriately improved such that the actual frequency response value is not too low.

In general, according to the microphone selection method provided in the embodiments of the present invention, by determining a standard frequency response value for each microphone by measurement, one of the at least two microphones which has a highest frequency response value may be determined as the microphone for receiving ultrasonic waves. Since a higher standard frequency response value indicates that when receiving the reflected ultrasonic wave the corresponding microphone has a smaller influence on the ultrasonic wave, it may be determined a preferred microphone and thus the influence of hardware microphone to ultrasonic waves can be reduced.

It is to be noted that in actual applications, steps 101 to 103 may also be implemented separately as an individual embodiment. Under such circumstance, a preferred microphone is not selected for the mobile device before leaving the factory, and each microphone's standard frequency response value is determined respectively, such that the mobile device may determine a preferred microphone according to actual environment when being operated.

Fig. 2 is a flow chart of another method for microphone selection according to an exemplary embodiment. As shown in Fig. 2, the method for microphone selection is applied in a mobile device having at least two microphones. The microphone selection method include the following steps.

Step 201, a first ultrasonic wave is transmitted, by using an ultrasonic transmitter, with a predefined transmission strength and a predefined frequency.

The predefined transmission strength as described herein is set up before the mobile device leaves the factory, and the predefined frequency is also set up as a preferred frequency before leaving the factory.

In actual applications, in order to be able to determine a currently most suitable microphone for receiving ultrasonic waves, the mobile device may use the ultrasonic transmitter to transmit a first ultrasonic wave with a predefined transmission strength and a predefined frequency.

Because that the mobile device is currently in an environment in which the mobile device is actually being operated, all the factors such as temperature, transmission medium density, ambient obstacles etc, within the environment may affect the attenuation degree of the ultrasonic waves. Combined with the influence of each microphone's hardware conditions on the ultrasonic waves, it is required to measure frequency response values of the reflected ultrasonic waves received by each microphone, and thus determine the microphone with the minimum attenuation as the preferred microphone.

It is to be noted that, the first ultrasonic wave as described in step 201 may be an ultrasonic wave transmitted during the actual operational process of the mobile device, which is different from the first ultrasonic waves as described in step 101.

Step 202, each of the at least two microphones may be used to receive a second ultrasonic wave reflected from the first ultrasonic wave, so as to acquire a frequency response value of the second ultrasonic wave received by each of the at least two microphones.

The mobile device may use the ultrasonic transmitter to transmit the first ultrasonic wave with the predefined transmission strength and the predefined frequency, and then use each microphone to receive a second ultrasonic wave reflected back from the first ultrasonic wave respectively.

From the time of transmitting the first ultrasonic wave to the time before receiving the first ultrasonic wave being reflected, amplitudes of each period within the ultrasonic wave may be affected by environmental factors. Furthermore, when a microphone receives a second ultrasonic wave and transmits information of the second ultrasonic wave to a processor of the mobile device, the amplitudes of each period within the ultrasonic wave may also be affected by hardware conditions of the microphone. Thus, with respect to the first ultrasonic wave having been transmitted, the mobile device is required to acquire a frequency response value of the second ultrasonic wave received by each of the at least two microphones.

Similarly, for any one of the at least two microphones, the highest amplitude of the second ultrasonic wave received by the microphone may be determined as the frequency response value of the second ultrasonic wave received by the microphone.

Due to the influence of each microphone, the frequency response value of the second ultrasonic wave received by each microphone may be different from each other.

It is to be noted that, the second ultrasonic wave as described in step 202 may be an ultrasonic wave transmitted during the actual operational process of the mobile device, which is different from the second ultrasonic waves as described in step 102.

Step 203, for each of the at least two microphones, the frequency response value of the microphone is compared with a standard frequency response value of the microphone.

For each microphone, the standard frequency response value of the microphone may be previously stored in the mobile device. The detailed process of such storage may refer to the descriptions of steps 101 to 103. That is, the mobile device transmits, by an ultrasonic transmitter of the mobile device, third ultrasonic waves within an audio-enclosed test box, wherein the third ultrasonic waves are transmitted with a predefined transmission strength and in different frequencies selected from a predefined frequency range; the mobile device acquires, by using each of the at least two microphones to receive fourth ultrasonic waves reflected from the third ultrasonic waves within the test box, frequency response values of the fourth ultrasonic waves received by each of the at least two microphones; and the mobile device acquires a highest frequency response value for each of the at least two microphones and determines the highest frequency response value for each of the at least two microphones as the standard frequency response value of the microphone.

Herein, in order to not confuse with the first ultrasonic wave and second ultrasonic wave in steps 201 and 202, the ultrasonic waves transmitted by using the ultrasonic transmitter of the mobile device within the audio-enclosed test box before leaving the factory are referred herein as third ultrasonic waves, and the ultrasonic waves received respectively by using each of the at least two microphones within the test box are referred herein as fourth ultrasonic waves.

Accordingly, for any one of the at least two microphones, the frequency response value of the microphone is compared with a standard frequency response value of the microphone.

Step 204, the microphone between the at least two microphones which has a smallest difference value between the frequency response value and the standard frequency response value may be selected as the microphone configured for receiving ultrasonic waves during subsequent operations of the mobile device.

In an embodiment, the difference value may be obtained by subtracting the acquired frequency response value from the standard frequency response value of the microphone.

For each microphone, a different value may be obtained. If a microphone has the smallest different value, it indicates that that microphone's frequency response value is closest to the standard value of the microphone when being actually operated. That is to say, that microphone has a minimum influence on the attenuation of the amplitude of ultrasonic waves. Thus, the microphone having the smallest difference value may be determined as the microphone for receiving ultrasonic waves.

In general, according to the microphone selection method provided in the embodiment of the present invention, a second ultrasonic wave reflected from the first ultrasonic wave received by each of the at least two microphones may be acquired, and a frequency response value of the second ultrasonic wave received by each of the at least two microphones may also be acquired, and thus one of the at least two microphones which has a smallest difference value between the frequency response value and the standard frequency response value may be determined as the preferred microphone. Since the closest distance between the frequency response value and the standard frequency response value indicates that it is closest to the factory standard, such microphone may be determined as the preferred microphone.

It is to be noted that in actual applications, the approach shown in Fig. 1A may be used to determine the microphone for receiving ultrasonic waves and each microphone's standard frequency response value before leaving the factory. Under such circumstance, if the microphone determined for receiving ultrasonic waves is damaged when being operated, the approach shown in Fig. 2 may then be used to re-determine the microphone for receiving ultrasonic waves.

The following embodiments are devices that may be used to perform the methods disclosed in the above embodiments of the invention. The methods above may be referred to for any undisclosed details of the devices of the following embodiments.

Fig. 3A is a block diagram of a device for microphone selection according to an exemplary embodiment. As shown in Fig. 3A, the device for microphone selection is used in a mobile device having at least two microphones. The device for microphone selection includes a transmission module 310, an acquisition module 320 and a first determination module 330.

The transmission module 310 is configured to transmit, by using an ultrasonic transmitter of the mobile device, first ultrasonic waves within an audio-enclosed test box, wherein the first ultrasonic waves are transmitted with a predefined transmission strength and in different frequencies selected from a predefined frequency range.

The ultrasonic transmitter as described herein may be an element in the mobile device, which is dedicated for transmitting ultrasonic waves, and may also be a speaker located on the smart device.

For mobile devices to be on-sale, each mobile device has an ultrasound transmission frequency which is best suitable for itself. These transmission frequencies generally fall within a predefined frequency range, for example a range from 20 kHz to 50 kHz.

In order to make the mobile device transmit ultrasound in its best suitable transmission frequency, during a measurement stage before leaving the factory, the mobile device may be controlled to transmit frequency sweep signal within the predefined frequency range, i.e., transmitting ultrasonic waves with their frequencies orderly varying within the predefined frequency range.

In an embodiment, one or more frequencies would be selected from the predefined frequency range in sequence, for example, the selected frequencies will be started from 20 kHz. For a selected frequency, the ultrasonic transmitter of the mobile device may be used to transmit, with a predefined transmission strength, a first ultrasonic wave having the selected frequency within the audio-enclosed test box.

The predefined transmission strength as described herein may be a particular transmission strength configured for the mobile device. In general, the transmission strength is directly proportional to an initial amplitude of the transmitted ultrasonic wave, i.e., the stronger the transmission strength, the higher the initial amplitude of the transmitted ultrasonic wave. The transmission frequency usually would not be influenced by the transmission strength.

The audio-enclosed test box as described herein is capable of blocking audio from transmitting outside, which is targeted to provide a proper environment for the mobile device. In the text box, the ultrasonic waves may be less influenced by other factors.

Due to influences caused by factors such as transmission medium, transmission medium temperature, transmission medium density, etc., the received ultrasonic wave which is reflected back may be attenuated by a certain degree. Since the measurement is performed within the audio-enclosed test box, the attenuation in this embodiment would be lower.

The acquisition module 320 is configured to acquire, by using each of the at least two microphones to receive second ultrasonic waves reflected from the first ultrasonic waves within the test box, frequency response values of the second ultrasonic waves received by the at least two microphones.

Each of the at least two microphones may be controlled to receive second ultrasonic waves reflected from the first ultrasonic waves within the test box.

For each of the second ultrasonic waves received by a microphone, the frequency response value may be the highest amplitude within periods of the second ultrasonic wave received by the microphone.

Because of the influences of environmental factors within the text box, after transmitted with the selected frequency, the first ultrasonic wave may have different attenuation degrees for each period's amplitude. Accordingly, the second ultrasonic wave reflected back may have different amplitudes within its periods.

Since each microphone receives a second ultrasonic wave reflected back from a same first ultrasonic wave and different microphones may be constructed with different hardware elements, the frequency response value of the second ultrasonic wave received by each microphone would be influenced by the hardware structure of the microphones. That is to say, even the first ultrasonic wave is the same and the first ultrasonic wave is transmitted in a same environment, the frequency response values of the second ultrasonic wave received by different microphones are different.

In order to determine one of the microphones which has minimum influence on the frequency response value, it is required to acquire frequency response values of the second ultrasonic wave received by each microphone.

The first determination module 330 is configured to select the microphone between the at least two microphones which has a highest frequency response value, as the microphone configured for receiving ultrasonic waves during subsequent operations of the mobile device.

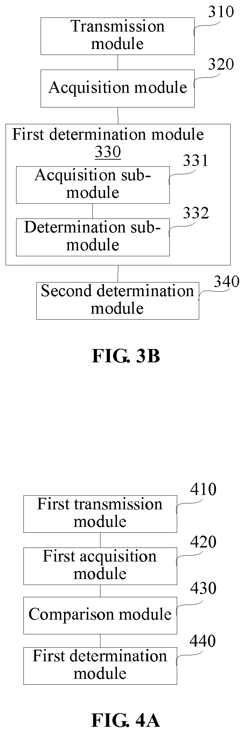

In an alternative embodiment, the first determination module 330 may further include an acquisition sub-module 331 and a determination sub-module 332, as shown in Fig. 3B.

The acquisition sub-module 331 may be configured to acquire a highest frequency response value for each of the at least two microphones and determine the highest frequency response value for each of the at least two microphones as a standard frequency response value of the microphone.

The determination sub-module 332 may be configured to select the microphone between the at least two microphones which has the highest standard frequency response value as the microphone configured for receiving ultrasonic waves during subsequent operations of the mobile device.

Alternatively, the acquisition sub-module 331 may be further configured to: for each of the at least two microphones, comparing the frequency response values of the second ultrasonic waves received by the microphone and selecting a highest frequency response value as the highest frequency response value of the microphone, wherein different second ultrasonic waves correspond to different frequencies.

In an embodiment, the device may further include a second determination module 340.

The second determination module 340 may be configured to determine the frequency corresponding to the highest standard frequency response value as a predefined frequency of the mobile device and determine the highest standard frequency response value as a standard frequency response value of the mobile device.

In actual implementations, when acquiring the highest frequency response value for each of the at least two microphones, for each microphone, the mobile device may compare the frequency response values of the second ultrasonic waves received by the microphone and determine a highest frequency response value as the highest frequency response value of the microphone. In an example, different second ultrasonic waves may correspond to different frequencies.

Each time a frequency is selected from the predefined frequency range, each microphone may have its own frequency response value. Thus, for different frequencies selected within the predefined frequency range, each microphone may obtain its own highest frequency response value. In an embodiment, the highest frequency response value of a microphone may be stored as the highest frequency response value of the microphone.

In general, according to the microphone selection device provided in the embodiments of the present invention, by determining a standard frequency response value for each microphone by measurement, one of the at least two microphones which has a highest frequency response value may be determined as the microphone for receiving ultrasonic waves. Since a higher standard frequency response value indicates that when receiving the reflected ultrasonic wave the corresponding microphone has a smaller influence on the ultrasonic wave, it may be determined a preferred microphone and thus the influence of hardware microphone to ultrasonic waves can be reduced.

Fig. 4A is a block diagram of yet another device for microphone selection according to an exemplary embodiment. As shown in Fig. 4A, the device for microphone selection is used in a mobile device having at least two microphones. The device for microphone selection includes a first transmission module 410, a first acquisition module 420, a comparison module 430 and a first determination module 440.

The first transmission module 410 may be configured to transmit, by using an ultrasonic transmitter, a first ultrasonic wave with a predefined transmission strength and a predefined frequency.

The predefined transmission strength as described herein is set up before the mobile device leaves the factory, and the predefined frequency is also set up as a preferred frequency before leaving the factory.

In actual applications, in order to be able to determine a currently most suitable microphone for receiving ultrasonic waves, the mobile device may use the ultrasonic transmitter to transmit a first ultrasonic wave with a predefined transmission strength and a predefined frequency.

Because that the mobile device is currently in an environment in which the mobile device is actually being operated, all the factors such as temperature, transmission medium density, ambient obstacles etc, within the environment may affect the attenuation degree of the ultrasonic waves. Combined with the influence of each microphone's hardware conditions on the ultrasonic waves, it is required to measure frequency response values of the reflected ultrasonic waves received by each microphone, and thus determine the microphone with the minimum attenuation as the preferred microphone.

The first acquisition module 420 may be configured to acquire, by using each of the at least two microphones to receive a second ultrasonic wave reflected from the first ultrasonic wave that is transmitted by the first transmission module, a frequency response value of the second ultrasonic wave received by each of the at least two microphones.

The mobile device may use the ultrasonic transmitter to transmit the first ultrasonic wave with the predefined transmission strength and the predefined frequency, and then use each microphone to receive a second ultrasonic wave reflected back from the first ultrasonic wave respectively.

From the time of transmitting the first ultrasonic wave to the time before receiving the first ultrasonic wave being reflected, amplitudes of each period within the ultrasonic wave may be affected by environmental factors. Furthermore, when a microphone receives a second ultrasonic wave and transmits information of the second ultrasonic wave to a processor of the mobile device, the amplitudes of each period within the ultrasonic wave may also be affected by hardware conditions of the microphone. Thus, with respect to the first ultrasonic wave having been transmitted, the mobile device is required to acquire a frequency response value of the second ultrasonic wave received by each of the at least two microphones.

Similarly, for any one of the at least two microphones, the highest amplitude of the second ultrasonic wave received by the microphone may be determined as the frequency response value of the second ultrasonic wave received by the microphone.

Due to the influence of each microphone, the frequency response value of the second ultrasonic wave received by each microphone may be different from each other.

The comparison module 430 may be configured to compare, for each of the at least two microphones, the frequency response value of the microphone acquired by the first acquisition module with a standard frequency response value of the microphone.

For each microphone, the frequency response value of the microphone is compared with a standard frequency response value of the microphone.

The first determination module 440 may be configured to select the microphone between the at least two microphones which has a smallest difference value between the frequency response value and the standard frequency response value, as the microphone configured for receiving ultrasonic waves during subsequent operations of the mobile device.

In an embodiment, the difference value may be obtained by subtracting the acquired frequency response value from the standard frequency response value of the microphone.

For each microphone, a different value may be obtained. If a microphone has the smallest different value, it indicates that that microphone's frequency response value is closest to the standard value of the microphone when being actually operated. That is to say, that microphone has a minimum influence on the attenuation of the amplitude of ultrasonic waves. Thus, the microphone having the smallest difference value may be determined as the microphone for receiving ultrasonic waves.

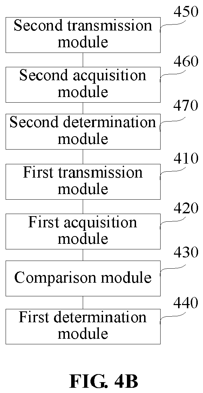

In an alternative embodiment, the device may further include: a second transmission module 450, a second acquisition module 460 and a second determination module 470, as shown in Fig. 4B.

The second transmission module 450 may be configured to transmit, by using an ultrasonic transmitter of the mobile device, third ultrasonic waves within an audio-enclosed test box, wherein the third ultrasonic waves are transmitted with a predefined transmission strength and in different frequencies selected from a predefined frequency range.

The second acquisition module 460 may be configured to acquire, by using each of the at least two microphones to receive fourth ultrasonic waves reflected from the third ultrasonic waves within the test box, frequency response values of the fourth ultrasonic waves received by each of the at least two microphones.

The second determination module 470 may be configured to acquire a highest frequency response value for each of the at least two microphones based on the frequency response values acquired by the second acquisition module and determine the highest frequency response value for each of the at least two microphones as the standard frequency response value of the microphone.

In general, according to the microphone selection device provided in the embodiments of the present invention, a second ultrasonic wave reflected from the first ultrasonic wave received by each of the at least two microphones may be acquired, and a frequency response value of the second ultrasonic wave received by each of the at least two microphones may also be acquired, and thus one of the at least two microphones which has a smallest difference value between the frequency response value and the standard frequency response value may be determined as the preferred microphone. Since the closest distance between the frequency response value and the standard frequency response value indicates that it is closest to the factory standard, such microphone may be determined as the preferred microphone.

With respect to the devices in the above embodiments, the specific manners that the respective modules perform operations have been described in detail in the embodiments regarding the relevant methods, and will not be elaborated herein.

According to an exemplary embodiment of the present invention, there is provided a device for microphone selection, which is enabled to implement the microphone selection method of the invention. The device may be applied in a mobile device having at least two microphones. The device for microphone selection may include: a processor and a memory for storing instructions executable by the processor.

The processor may be configured to: transmit, by using an ultrasonic transmitter of the mobile device, first ultrasonic waves within an audio-enclosed test box, wherein the first ultrasonic waves are transmitted with a predefined transmission strength and in different frequencies selected from a predefined frequency range; acquire, by using each of the at least two microphones to receive second ultrasonic waves reflected from the first ultrasonic waves within the test box, frequency response values of the second ultrasonic waves received by each of the at least two microphones; and select the microphone between the at least two microphones which has a highest frequency response value, as the microphone configured for receiving ultrasonic waves during operations of the mobile device.

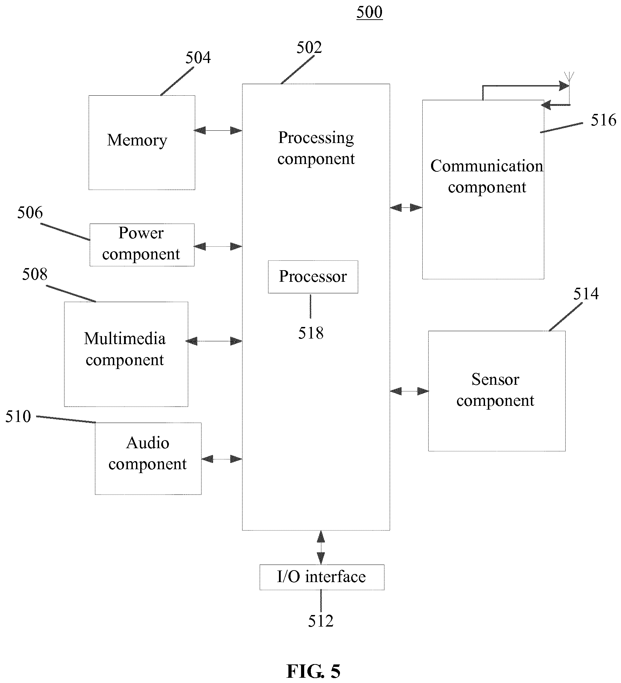

Fig. 5 is a block diagram of a device for microphone selection according to an exemplary embodiment. For example, the device 500 may be a mobile phone capable of transmitting ultrasonic waves. The mobile device as described herein may include a mobile phone, a tablet device, a wearable device, a handset, a computer, a digital broadcast terminal, a messaging device, a gaming console, a medical device, exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for microphone selection .

In exemplary embodiments, there is also provided a non-transitory computer-readable storage medium including instructions, such as included in the memory 504, executable by the processor 518 in the terminal device 500, for performing the above-described methods for microphone selection. For example, the non-transitory computer-readable storage medium may be a ROM, a RAM, a CD-ROM, a magnetic tape, a floppy disc, an optical data storage device, and the like.

Unless otherwise defined, the technical terms or scientific terms as used herein may have usual meaning understood by those having ordinary skills in the related art. Terms such as "first", "second", "third", "fourth", etc., as used in the specification and claims of the application do not indicate any sequence, numbers, or importance, but only used to differentiate different components. Meanwhile, similar terms such as "a" or "an" do not have any limitations on number, but means that there exists at least one. A phrase "at least two" refers to "two or more than two". Terms such as "connect" or "connected" and the like are not limited to physical or mechanical connections, but may also include electrical connections, regardless of direct or indirect connections.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. The specification and embodiments are merely considered to be exemplary and the substantive scope of the invention is limited only by the appended claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for microphone selection, **characterized in that** the method is applied in a mobile device having at least two microphones and comprises:
transmitting (101), by using an ultrasonic transmitter of the mobile device, first ultrasonic waves within an audio-enclosed test box, wherein the first ultrasonic waves are transmitted with a predefined transmission strength and in different frequencies selected from a predefined frequency range;
acquiring (102), by using each of the at least two microphones adapted to receive second ultrasonic waves resulting from the reflection of the first ultrasonic waves within the test box, frequency response values of the second ultrasonic waves received by each of the at least two microphones; and
wherein for each second ultrasonic wave resulting from the reflection of a respective first ultrasonic wave of a respective frequency selected from the predefined frequency range, a frequency response value of the second ultrasonic wave received by each of the at least two microphones is the highest amplitude received by the microphone within periods of the second ultrasonic wave of the respective frequency, the method further comprising:
acquiring (103) a highest frequency response value for each of the at least two microphones by comparing the frequency response values of the second ultrasonic waves of the different frequencies received by the microphone and determining a highest frequency response value as the highest frequency response value of the microphone;
determining (103) the highest frequency response value for each of the at least two microphones as a standard frequency response value of the microphone; and
selecting (104) the microphone between the at least two microphones which has the highest standard frequency response value as the microphone configured for receiving ultrasonic waves during subsequent operations of the mobile device.

2. The method of claim 1, further comprising:
determining the frequency corresponding to the highest standard frequency response value as a predefined frequency of the mobile device, and determining the highest standard frequency response value as a standard frequency response value of the mobile device.

3. A method for microphone selection, **characterized in that** the method is applied in a mobile device having at least two microphones and comprises:
transmitting (201), by using an ultrasonic transmitter, a first ultrasonic wave with a predefined transmission strength and a predefined frequency;
acquiring (202), by using each of the at least two microphones to receive a second ultrasonic wave resulting from the reflection of the first ultrasonic wave, a frequency response value of the second ultrasonic wave received by each of the at least two microphones, wherein the frequency response value of the second ultrasonic wave received by each of the at least two microphones is the highest amplitude received by the microphone within periods of the second ultrasonic wave of the predefined frequency;
comparing (203), for each of the at least two microphones, the frequency response value of the microphone with a standard frequency response value of the microphone; and
selecting (204) the microphone between the at least two microphones which has a smallest difference value between the frequency response value and the standard frequency response value, as the microphone configured for receiving ultrasonic waves during subsequent operations of the mobile device.

4. The method of claim 3, further comprising:
transmitting, by using an ultrasonic transmitter of the mobile device, third ultrasonic waves within an audio-enclosed test box, wherein the third ultrasonic waves are transmitted with a predefined transmission strength and in different frequencies selected from a predefined frequency range;
acquiring, by using each of the at least two microphones to receive fourth ultrasonic waves resulting from the reflection of the third ultrasonic waves within the test box, frequency response values of the fourth ultrasonic waves received by each of the at least two microphones; and
acquiring a highest frequency response value for each of the at least two microphones, and determining the highest frequency response value for each of the at least two microphones as the standard frequency response value of the microphone,
wherein for each fourth ultrasonic wave resulting from the reflection of a respective third ultrasonic wave of a respective frequency selected from the predefined frequency range, a frequency response value of the fourth ultrasonic wave received by each of the at least two microphones is the highest amplitude received by the microphone within periods of the fourth ultrasonic wave of the respective frequency.

5. A device for microphone selection, **characterized in that** the device is used in a mobile device having at least two microphones and comprises:
a transmission module (310) configured to transmit, by using an ultrasonic transmitter of the mobile device, first ultrasonic waves within an audio-enclosed test box, wherein the first ultrasonic waves are transmitted with a predefined transmission strength and in different frequencies selected from a predefined frequency range;
an acquisition module (320) configured to acquire, by using each of the at least two microphones adapted to receive second ultrasonic waves resulting from the reflection of the first ultrasonic waves within the test box, frequency response values of the second ultrasonic waves received by the at least two microphones,
wherein for each second ultrasonic wave resulting from the reflection of a respective first ultrasonic wave of a respective frequency selected from the predefined frequency range, a frequency response value of the second ultrasonic wave received by each of the at least two microphones is the highest amplitude received by the microphone within periods of the second ultrasonic wave of the respective frequency, wherein the device further comprises a first determination module (330), and the first determination module further comprises:
an acquisition sub-module (331) configured to acquire a highest frequency response value for each of the at least two microphones by comparing the frequency response values of the second ultrasonic waves of the different frequencies received by the microphone and determining a highest frequency response value as the highest frequency response value of the microphone, and determine the highest frequency response value for each of the at least two microphones as a standard frequency response value of the microphone; and
a determination sub-module (332) configured to select the microphone between the at least two microphones which has the highest standard frequency response value as the microphone configured for receiving ultrasonic waves during subsequent operations of the mobile device.

6. The device of claim 5, further comprising:
a second determination module (340) configured to determine the frequency corresponding to the highest standard frequency response value as a predefined frequency of the mobile device and determine the highest standard frequency response value as a standard frequency response value of the mobile device.

7. A device for microphone selection, **characterized in that** the device is used in a mobile device having at least two microphones and comprises:
a first transmission module (410) configured to transmit, by using an ultrasonic transmitter, a first ultrasonic wave with a predefined transmission strength and a predefined frequency;
a first acquisition module (420) configured to acquire, by using each of the at least two microphones to receive a second ultrasonic wave resulting from the reflection of the first ultrasonic wave that is transmitted by the first transmission module, a frequency response value of the second ultrasonic wave received by each of the at least two microphones, wherein the frequency response value of the second ultrasonic wave received by each of the at least two microphones is the highest amplitude received by the microphone within periods of the second ultrasonic wave of the predefined frequency;
a comparison module (430) configured to compare, for each of the at least two microphones, the frequency response value of the microphone acquired by the first acquisition module with a standard frequency response value of the microphone; and
a first determination module (440) configured to select the microphone between the at least two microphones which has a smallest difference value between the frequency response value and the standard frequency response value, as the microphone configured for receiving ultrasonic waves during subsequent operations of the mobile device.

8. The device of claim 7, further comprising:
a second transmission module (450) configured to transmit, by using an ultrasonic transmitter of the mobile device, third ultrasonic waves within an audio-enclosed test box, wherein the third ultrasonic waves are transmitted with a predefined transmission strength and in different frequencies selected from a predefined frequency range;
a second acquisition module (460) configured to acquire, by using each of the at least two microphones to receive fourth ultrasonic waves resulting from the reflection of the third ultrasonic waves within the test box, frequency response values of the fourth ultrasonic waves received by each of the at least two microphones; and
a second determination module (470) configured to acquire a highest frequency response value for each of the at least two microphones based on the frequency response values acquired by the second acquisition module and determine the highest frequency response value for each of the at least two microphones as the standard frequency response value of the microphone,
wherein for each fourth ultrasonic wave resulting from the reflection of a respective third ultrasonic wave of a respective frequency selected from the predefined frequency range, a frequency response value of the fourth ultrasonic wave received by each of the at least two microphones is the highest amplitude received by the microphone within periods of the fourth ultrasonic wave of the respective frequency.

9. A computer program comprising instructions which, when executed by a computer, cause the computer to carry out the steps of a method for microphone selection according to any one of claims 1 to 4.

10. A computer readable storage device having stored thereon a computer program according to claim 9.

## Patentansprüche

1. Verfahren zur Mikrofonauswahl, **dadurch gekennzeichnet, dass** das Verfahren in einer mobilen Vorrichtung mit mindestens zwei Mikrofonen angewendet wird und umfasst:
Übertragen (101) unter Verwendung eines Ultraschallsenders der mobilen Vorrichtung von ersten Ultraschallwellen innerhalb eines Audio-geschlossenen Prüfraumes, wobei die ersten Ultraschallwellen mit einer vorbestimmten Übertragungsstärke und in verschiedenen Frequenzen übertragen werden, die aus einem vordefinierten Frequenzbereich ausgewählt sind;
Erfassen (102) unter Verwendung jedes der mindestens zwei Mikrofone, die zum Empfangen zweiter Ultraschallwellen geeignet sind, die sich aus der Reflexion der ersten Ultraschallwellen innerhalb des Prüfraumes ergeben, von Frequenzreaktionswerten der zweiten Ultraschallwellen, die von jedem der mindestens zwei Mikrophone empfangen werden; und
wobei für jede zweite Ultraschallwelle, die sich aus der Reflexion einer jeweiligen ersten Ultraschallwelle einer entsprechenden Frequenz ergibt, die aus dem vordefinierten Frequenzbereich ausgewählt ist, ein Frequenzreaktionswert der zweiten Ultraschallwelle, die von jedem der mindestens zwei Mikrofone empfangen wird, die höchste Amplitude ist, die vom Mikrofon innerhalb von Perioden der zweiten Ultraschallwelle der jeweiligen Frequenz empfangen wird, wobei das Verfahren ferner umfasst:
Erfassen (103) eines höchsten Frequenzreaktionswerts für jedes der mindestens zwei Mikrofone durch Vergleichen der Frequenzreaktionsswerte der zweiten Ultraschallwellen der verschiedenen vom Mikrofon empfangenen Frequenzen und Bestimmen eines höchsten Frequenzreaktionswerts als höchsten Frequenzreaktionswert des Mikrofons;
Bestimmen (103) des höchsten Frequenzreaktionswerts für jedes der mindestens zwei Mikrofone als Standardfrequenzreaktionswert des Mikrofons; und
Auswählen (104) des Mikrofons zwischen den mindestens zwei Mikrofonen, das den höchsten Standardfrequenzreaktionswert aufweist, als das Mikrofon, das zum Empfangen von Ultraschallwellen während nachfolgender Operationen der mobilen Vorrichtung konfiguriert ist.

2. Verfahren nach Anspruch 1, ferner umfassend:
Bestimmen der Frequenz, die dem höchsten Standardfrequenzreaktionswert entspricht, als vordefinierte Frequenz der mobilen Vorrichtung, und Bestimmen des höchsten Standardfrequenzreaktionswerts als Standardfrequenzreaktionswert der mobilen Vorrichtung.

3. Verfahren zur Mikrofonauswahl, **dadurch gekennzeichnet, dass** das Verfahren in einer mobilen Vorrichtung mit mindestens zwei Mikrofonen angewendet wird und umfasst:
Übertragen (201) einer ersten Ultraschallwelle mit einer vorbestimmten Übertragungsstärke und einer vorbestimmten Frequenz unter Verwendung eines Ultraschall senders;
Erfassen (202) unter Verwendung jedes der mindestens zwei Mikrofone zum Empfangen einer zweiten Ultraschallwelle, die sich aus der Reflexion der ersten Ultraschallwelle ergibt, eines Frequenzreaktionswertes der zweiten Ultraschallwelle, die von jedem der mindestens zwei Mikrofone empfangen wird, wobei der Frequenzreaktionswert der zweiten Ultraschallwelle, die von jedem der mindestens zwei Mikrofone empfangen wird, die höchste Amplitude ist, die vom Mikrofon innerhalb von Perioden der zweiten Ultraschallwelle der vordefinierten Frequenz empfangen wird;
Vergleichen (203) des Frequenzreaktionswerts des Mikrofons mit einem Standardfrequenzreaktionswert des Mikrofons für jedes der mindestens zwei Mikrofone; und
Auswählen (204) des Mikrofons zwischen den mindestens zwei Mikrofonen, das einen kleinsten Differenzwert zwischen dem Frequenzreaktionswert und dem Standardfrequenzreaktionswert aufweist, als das Mikrofon, das zum Empfangen von Ultraschallwellen bei nachfolgenden Operationen der mobilen Vorrichtung konfiguriert ist.

4. Verfahren nach Anspruch 3, ferner umfassend:
Übertragen von dritten Ultraschallwellen innerhalb eines Audio-geschlossenen Prüfstandes unter Verwendung eines Ultraschallsenders der mobilen Vorrichtung, wobei die dritten Ultraschallwellen mit einer vordefinierten Übertragungsstärke und in verschiedenen Frequenzen, ausgewählt aus einem vorbestimmten Frequenzbereich, übertragen werden;
Erfassen von Frequenzreaktionswerten der vierten Ultraschallwellen, die von jedem der mindestens zwei Mikrofone empfangen werden, unter Verwendung jedes der mindestens zwei Mikrofone zum Empfangen vierter Ultraschallwellen, die sich aus der Reflexion der dritten Ultraschallwellen innerhalb des Prüfstandes ergeben; und
Erfassen eines höchsten Frequenzreaktionswerts für jedes der mindestens zwei Mikrofone und Bestimmen des höchsten Frequenzreaktionswerts für jedes der mindestens zwei Mikrofone als Standardfrequenzreaktionswert des Mikrofons,
wobei für jede vierte Ultraschallwelle, die sich aus der Reflexion einer jeweiligen dritten Ultraschallwelle einer entsprechenden Frequenz ergibt, die aus dem vordefinierten Frequenzbereich ausgewählt ist, ein Frequenzreaktionswert der vierten Ultraschallwelle, die von jedem der mindestens zwei Mikrofone empfangen wird, die höchste Amplitude ist, die vom Mikrofon innerhalb von Perioden der vierten Ultraschallwelle der jeweiligen Frequenz empfangen wird.

5. Vorrichtung zur Mikrofonauswahl, **dadurch gekennzeichnet, dass** die Vorrichtung in einer mobilen Vorrichtung mit mindestens zwei Mikrofonen verwendet wird und umfasst:
ein Übertragungsmodul (310), das konfiguriert ist, um unter Verwendung eines Ultraschallsenders der mobilen Vorrichtung erste Ultraschallwellen innerhalb eines Audio-geschlossenen Prüfraumes zu übertragen, wobei die ersten Ultraschallwellen mit einer vorbestimmten Übertragungsstärke und in verschiedenen Frequenzen übertragen werden, die aus einem vordefinierten Frequenzbereich ausgewählt sind;
ein Erfassungsmodul (320), das konfiguriert ist, um unter Verwendung jedes der mindestens zwei Mikrofone, die zum Empfangen zweiter Ultraschallwellen geeignet sind, die sich aus der Reflexion der ersten Ultraschallwellen innerhalb des Prüfstandes ergeben, Frequenzreaktionswerte der zweiten Ultraschallwellen, die von den mindestens zwei Mikrofonen empfangen werden, zu erfassen,
wobei für jede zweite Ultraschallwelle, die sich aus der Reflexion einer jeweiligen ersten Ultraschallwelle einer entsprechenden Frequenz ergibt, die aus dem vordefinierten Frequenzbereich ausgewählt ist, ein Frequenzreaktionswert der zweiten Ultraschallwelle, die von jedem der mindestens zwei Mikrofone empfangen wird, die höchste Amplitude ist, die vom Mikrofon innerhalb von Perioden der zweiten Ultraschallwelle der jeweiligen Frequenz empfangen wird, wobei die Vorrichtung ferner ein erstes Bestimmungsmodul (330) umfasst, und das erste Bestimmungsmodul ferner umfasst:
ein Erfassungs-Submodul (331), das konfiguriert ist, um einen höchsten Frequenzreaktionswert für jedes der mindestens zwei Mikrofone zu erfassen, indem es die Frequenzreaktionswerte der zweiten Ultraschallwellen der verschiedenen vom Mikrofon empfangenen Frequenzen vergleicht und einen höchsten Frequenzreaktionswert als höchsten Frequenzreaktionswert des Mikrofons bestimmt und den höchsten Frequenzreaktionswert für jedes der mindestens zwei Mikrofone als Standardfrequenzreaktionswert des Mikrofons bestimmt; und
ein Bestimmungs-Submodul (332), das konfiguriert ist, um das Mikrofon zwischen den mindestens zwei Mikrofonen, das den höchsten Standardfrequenzreaktionswert aufweist, als das Mikrofon auszuwählen, das konfiguriert ist, um Ultraschallwellen während nachfolgender Operationen der mobilen Vorrichtung zu empfangen.

6. Vorrichtung nach Anspruch 5, ferner umfassend:
ein zweites Bestimmungsmodul (340), das konfiguriert ist, um die Frequenz, die dem höchsten Standardfrequenzreaktionswert entspricht, als vordefinierte Frequenz der mobilen Vorrichtung zu bestimmen, und um den höchsten Standardfrequenzreaktionswert als Standardfrequenzreaktionswert der mobilen Vorrichtung zu bestimmen.

7. Vorrichtung zur Mikrofonauswahl, **dadurch gekennzeichnet, dass** die Vorrichtung in einer mobilen Vorrichtung mit mindestens zwei Mikrofonen verwendet wird und umfasst:
ein erstes Übertragungsmodul (410), das konfiguriert ist, um unter Verwendung eines Ultraschallsenders eine erste Ultraschallwelle mit einer vorbestimmten Übertragungsstärke und einer vorbestimmten Frequenz zu übertragen;
ein erstes Erfassungsmodul (420), das konfiguriert ist, um unter Verwendung jedes der mindestens zwei Mikrofone eine zweite Ultraschallwelle zu erfassen, die sich aus der Reflexion der ersten Ultraschallwelle ergibt, die durch das erste Übertragungsmodul übertragen wird, einen Frequenzreaktionswert der zweiten Ultraschallwelle, die durch jedes der mindestens zwei Mikrofone empfangen wird, wobei der Frequenzreaktionswert der zweiten Ultraschallwelle, die durch jedes der mindestens zwei Mikrofone empfangen wird, die höchste Amplitude ist, die durch das Mikrofon innerhalb von Perioden der zweiten Ultraschallwelle der vorbestimmten Frequenz empfangen wird;
ein Vergleichsmodul (430), das konfiguriert ist, um für jedes der mindestens zwei Mikrofone den Frequenzreaktionswert des von dem ersten Erfassungsmodul erfassten Mikrofons mit einem Standardfrequenzreaktionswert des Mikrofons zu vergleichen; und
ein erstes Bestimmungsmodul (440), das konfiguriert ist, um das Mikrofon zwischen den mindestens zwei Mikrofonen auszuwählen, das einen kleinsten Differenzwert zwischen dem Frequenzreaktionswert und dem Standardfrequenzreaktionswert aufweist, wie das Mikrofon, das zum Empfangen von Ultraschallwellen während nachfolgender Operationen der mobilen Vorrichtung konfiguriert ist.

8. Vorrichtung nach Anspruch 7, ferner umfassend:
ein zweites Übertragungsmodul (450), das konfiguriert ist, um unter Verwendung eines Ultraschallsenders der mobilen Vorrichtung dritte Ultraschallwellen innerhalb eines Audio-geschlossenen Prüfraumes zu übertragen, wobei die dritten Ultraschallwellen mit einer vorbestimmten Übertragungsstärke und in verschiedenen Frequenzen übertragen werden, die aus einem vorbestimmten Frequenzbereich ausgewählt sind;
ein zweites Erfassungsmodul (460), das konfiguriert ist, um unter Verwendung jedes der mindestens zwei Mikrofone zum Empfangen vierter Ultraschallwellen, die sich aus der Reflexion der dritten Ultraschallwellen innerhalb des Prüfstandes ergeben, Frequenzreaktionswerte der vierten Ultraschallwellen, die von jedem der mindestens zwei Mikrofone empfangen werden, zu erfassen; und
ein zweites Bestimmungsmodul (470), das konfiguriert ist, um einen höchsten Frequenzreaktionswert für jedes der mindestens zwei Mikrofone basierend auf den von dem zweiten Bestimmungsmodul erfassten Frequenzreaktionswerten zu erfassen und den höchsten Frequenzreaktionswert für jedes der mindestens zwei Mikrofone als Standardfrequenzreaktionswert des Mikrofons zu bestimmen,
wobei für jede vierte Ultraschallwelle, die sich aus der Reflexion einer jeweiligen dritten Ultraschallwelle einer entsprechenden Frequenz ergibt, die aus dem vordefinierten Frequenzbereich ausgewählt ist, ein Frequenzreaktionswert der vierten Ultraschallwelle, die von jedem der mindestens zwei Mikrofone empfangen wird, die höchste Amplitude ist, die vom Mikrofon innerhalb von Perioden der vierten Ultraschallwelle der jeweiligen Frequenz empfangen wird.

9. Computerprogramm, umfassend Anweisungen, die, wenn sie von einem Computer ausgeführt werden, bewirken, dass der Computer die Schritte eines Verfahrens zur Mikrofonauswahl nach einem der Ansprüche 1 bis 4 durchführt.

10. Computerlesbare Speichervorrichtung, auf der ein Computerprogramm nach Anspruch 9 gespeichert ist.

## Revendications

1. Procédé de sélection de microphone, **caractérisé en ce que** le procédé est appliqué dans un dispositif mobile ayant au moins deux microphones et comporte les étapes consistant à :
transmettre (101), en utilisant un transmetteur à ultrasons du dispositif mobile, des premières ondes ultrasonores à l'intérieur d'un boîtier d'essai audio fermé, les premières ondes ultrasonores étant transmises avec une intensité de transmission prédéfinie et à différentes fréquences sélectionnées parmi une gamme de fréquences prédéfinie ;
acquérir (102), en utilisant chacun des au moins deux microphones adaptés pour recevoir des deuxièmes ondes ultrasonores résultant de la réflexion des premières ondes ultrasonores à l'intérieur du boîtier d'essai, des valeurs de réponse en fréquence des deuxièmes ondes ultrasonores reçues par chacun des au moins deux microphones ; et
dans lequel pour chaque deuxième onde ultrasonore résultant de la réflexion d'une première onde ultrasonore respective d'une fréquence respective sélectionnée parmi la gamme de fréquences prédéfinie, une valeur de réponse en fréquence de la deuxième onde ultrasonore reçue par chacun des au moins deux microphones est la plus grande amplitude reçue par le microphone sur des périodes de la deuxième onde ultrasonore de la fréquence respective, le procédé comportant en outre les étapes consistant à :
acquérir (103) une valeur de réponse en fréquence la plus élevée pour chacun des au moins deux microphones en comparant les valeurs de réponse en fréquence des deuxièmes ondes ultrasonores des différentes fréquences reçues par le microphone et déterminer une valeur de réponse en fréquence la plus élevée comme étant la valeur de réponse en fréquence la plus élevée du microphone ;
déterminer (103) la valeur de réponse en fréquence la plus élevée pour chacun des au moins deux microphones comme étant la valeur de réponse en fréquence standard du microphone ; et
sélectionner (104) le microphone entre les au moins deux microphones qui a la valeur de réponse en fréquence standard la plus élevée comme étant le microphone configuré pour recevoir des ondes ultrasonores pendant des fonctionnements ultérieurs du dispositif mobile.

2. Procédé selon la revendication 1, comportant en outre l'étape consistant à :
déterminer la fréquence correspondant à la valeur de réponse en fréquence standard la plus élevée comme étant une fréquence prédéfinie du dispositif mobile, et déterminer la valeur de réponse en fréquence standard la plus élevée comme étant une valeur de réponse en fréquence standard du dispositif mobile.

3. Procédé de sélection de microphone, **caractérisé en ce que** le procédé est appliqué dans un dispositif mobile ayant au moins deux microphones et comporte les étapes consistant à :
transmettre (201), en utilisant un transmetteur à ultrasons, une première onde ultrasonore avec une intensité de transmission prédéfinie et une fréquence prédéfinie ;
acquérir (202), en utilisant chacun des au moins deux microphones pour recevoir une deuxième onde ultrasonore résultant de la réflexion de la première onde ultrasonore, une valeur de réponse en fréquence de la deuxième onde ultrasonore reçue par chacun des au moins deux microphones, la valeur de réponse en fréquence de la deuxième onde ultrasonore reçue par chacun des au moins deux microphones étant la plus grande amplitude reçue par le microphone sur des périodes de la deuxième onde ultrasonore de la fréquence prédéfinie ;
comparer (203), pour chacun des au moins deux microphones, la valeur de réponse en fréquence du microphone avec une valeur de réponse en fréquence standard du microphone ; et sélectionner (204) le microphone entre les au moins deux microphones qui a la plus petite valeur de différence entre la valeur de réponse en fréquence et la valeur de réponse en fréquence standard, comme étant le microphone configuré pour recevoir des ondes ultrasonores pendant des fonctionnements ultérieurs du dispositif mobile.

4. Procédé selon la revendication 3, comportant en outre les étapes consistant à :
transmettre, en utilisant un transmetteur à ultrasons du dispositif mobile, des troisièmes ultrasonores à l'intérieur d'un boîtier d'essai audio fermé, les troisièmes ondes ultrasonores étant transmises avec une intensité de transmission prédéfinie et à différentes fréquences sélectionnées parmi une gamme de fréquences prédéfinie ; acquérir, en utilisant chacun des au moins deux microphones pour recevoir des quatrièmes ondes ultrasonores résultant de la réflexion des troisièmes ondes ultrasonores à l'intérieur du boîtier d'essai, des valeurs de réponse en fréquence des quatrièmes ondes ultrasonores reçues par chacun des au moins deux microphones ; et
acquérir une valeur de réponse en fréquence la plus élevée pour chacun des au moins deux microphones, et déterminer la valeur de réponse en fréquence la plus élevée pour chacun des au moins deux microphones comme étant la valeur de réponse en fréquence standard du microphone,
dans lequel pour chaque quatrième onde ultrasonore résultant de la réflexion d'une troisième onde ultrasonore respective d'une fréquence respective sélectionnée parmi la gamme de fréquences prédéfinie, une valeur de réponse en fréquence de la quatrième onde ultrasonore reçue par chacun des au moins deux microphones est la plus grande amplitude reçue par le microphone sur des périodes de la quatrième onde ultrasonore de la fréquence respective.

5. Dispositif de sélection de microphone, **caractérisé en ce que** le dispositif est utilisé dans un dispositif mobile ayant au moins deux microphones et comporte :
un module de transmission (310) configuré pour transmettre, en utilisant un transmetteur à ultrasons du dispositif mobile, des premières ondes ultrasonores à l'intérieur d'un boîtier d'essai audio fermé, les premières ondes ultrasonores étant transmises avec une intensité de transmission prédéfinie et à différentes fréquences sélectionnées parmi une gamme de fréquences prédéfinie ;
un module d'acquisition (320) configuré pour acquérir, en utilisant chacun des au moins deux microphones adaptés pour recevoir des deuxièmes ondes ultrasonores résultant de la réflexion des premières ondes ultrasonores à l'intérieur du boîtier d'essai, des valeurs de réponse en fréquence des deuxièmes ondes ultrasonores reçues par les au moins deux microphones,
dans lequel pour chaque deuxième onde ultrasonore résultant de la réflexion d'une première onde ultrasonore respective d'une fréquence respective sélectionnée parmi la gamme de fréquences prédéfinie, une valeur de réponse en fréquence de la deuxième onde ultrasonore reçue par chacun des au moins deux microphones est la plus grande amplitude reçue par le microphone sur des périodes de la deuxième onde ultrasonore de la fréquence respective, le dispositif comportant en outre un premier module de détermination (330), et le premier module de détermination comportant en outre :
un sous-module d'acquisition (331) configuré pour acquérir une valeur de réponse en fréquence la plus élevée pour chacun des au moins deux microphones en comparant les valeurs de réponse en fréquence des deuxièmes ondes ultrasonores des différentes fréquences reçues par le microphone et en déterminant une valeur de réponse en fréquence la plus élevée comme étant la valeur de réponse en fréquence la plus élevée du microphone, et déterminer la valeur de réponse en fréquence la plus élevée pour chacun des au moins deux microphones comme étant une valeur de réponse en fréquence standard du microphone ; et
un sous-module de détermination (332) configuré pour sélectionner le microphone entre les au moins deux microphones qui a la valeur de réponse en fréquence standard la plus élevée comme étant le microphone configuré pour recevoir des ondes ultrasonores pendant des fonctionnements ultérieurs du dispositif mobile.

6. Dispositif selon la revendication 5, comportant en outre :
un second module de détermination (340) configuré pour déterminer la fréquence correspondant à la valeur de réponse en fréquence standard la plus élevée comme étant une fréquence prédéfinie du dispositif mobile, et déterminer la valeur de réponse en fréquence standard la plus élevée comme étant une valeur de réponse en fréquence standard du dispositif mobile.

7. Dispositif de sélection de microphone, **caractérisé en ce que** le dispositif est utilisé dans un dispositif mobile ayant au moins deux microphones et comporte :
un premier module de transmission (410) configuré pour émettre, en utilisant un transmetteur à ultrasons, une première onde ultrasonore avec une intensité de transmission prédéfinie et une fréquence prédéfinie ;
un premier module d'acquisition (420) configuré pour acquérir, en utilisant chacun des au moins deux microphones pour recevoir une deuxième onde ultrasonore résultant de la réflexion de la première onde ultrasonore qui est transmise par le premier module de transmission, une valeur de réponse en fréquence de la deuxième onde ultrasonore reçue par chacun des au moins deux microphones, la valeur de réponse en fréquence de la deuxième onde ultrasonore reçue par chacun des au moins deux microphones étant la plus grande amplitude reçue par le microphone sur des périodes de la deuxième onde ultrasonore de la fréquence prédéfinie ;
un module de comparaison (430) configuré pour comparer, pour chacun des au moins deux microphones, la valeur de réponse en fréquence du microphone acquise par le premier module d'acquisition avec une valeur de réponse en fréquence standard du microphone ; et
un premier module de détermination (440) configuré pour sélectionner le microphone entre les au moins deux microphones qui a la plus petite valeur de différence entre la valeur de réponse en fréquence et la valeur de réponse en fréquence standard, comme étant le microphone configuré pour recevoir des ondes ultrasonores pendant des fonctionnements ultérieurs du dispositif mobile.

8. Dispositif selon la revendication 7, comportant en outre :
un second module de transmission (450) configuré pour transmettre, en utilisant un transmetteur à ultrasons du dispositif mobile, des troisièmes ondes ultrasonores à l'intérieur d'un boîtier d'essai audio fermé, les troisièmes ondes ultrasonores étant transmises avec une intensité de transmission prédéfinie et à différentes fréquences sélectionnées parmi une gamme de fréquences prédéfinie ;
un second module d'acquisition (460) configuré pour acquérir, en utilisant chacun des au moins deux microphones pour recevoir des quatrièmes ondes ultrasonores résultant de la réflexion des troisièmes ondes ultrasonores à l'intérieur du boîtier d'essai, des valeurs de réponse en fréquence des quatrièmes ondes ultrasonores reçues par chacun des au moins deux microphones ; et
un second module de détermination (470) configuré pour acquérir une valeur de réponse en fréquence la plus élevée pour chacun des au moins deux microphones sur la base des valeurs de réponse en fréquence acquises par le second module d'acquisition et déterminer la valeur de réponse en fréquence la plus élevée pour chacun des au moins deux microphones comme étant la valeur de réponse en fréquence standard du microphone,
dans lequel pour chaque quatrième onde ultrasonore résultant de la réflexion d'une troisième onde ultrasonore respective d'une fréquence respective sélectionnée parmi la gamme de fréquences prédéfinie, une valeur de réponse en fréquence de la quatrième onde ultrasonore reçue par chacun des au moins deux microphones est la plus grande amplitude reçue par le microphone sur des périodes de la quatrième onde ultrasonore de la fréquence respective.

9. Programme informatique comportant des instructions qui, lorsqu'elles sont exécutées par un ordinateur, amènent l'ordinateur à exécuter les étapes d'un procédé de sélection de microphone selon l'une quelconque des revendications 1 à 4.

10. Dispositif de stockage lisible par ordinateur sur lequel est stocké un programme informatique selon la revendication 9.
